(19) **Europäisches Patentamt European Patent Office Office européen des brevets**

(11) **EP 4 674 270 A1**

(12) **EUROPEAN PATENT APPLICATION**
published in accordance with Art. 153(4) EPC

(43) Date of publication:
**07.01.2026  Bulletin 2026/02**

(21) Application number: **23925880.9**

(22) Date of filing: **30.05.2023**

(51) International Patent Classification (IPC):
**A01N 65/48** (2009.01)    **A01P 3/00** (2006.01)

(52) Cooperative Patent Classification (CPC):
Y02A 50/30

(86) International application number:
**PCT/CN2023/096997**

(87) International publication number:
**WO 2024/183166 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2023  CN 202310221795**

(71) Applicant: **Shanghai Jiao Tong University Shanghai 200240 (CN)**

(72) Inventors:
• **DAI, Guanghui Shanghai 200240 (CN)**
• **ZHANG, Yanxin Shanghai 200240 (CN)**

(74) Representative: **Regimbeau 20, rue de Chazelles 75847 Paris Cedex 17 (FR)**

(54) **METHOD FOR PREPARING CURCUMAE LONGAE RHIZOMA EXTRACT, AND PRODUCT THEREOF AND USE THEREOF IN PREVENTION AND CONTROL OF PLANT POWDERY MILDEW**

(57)  The present application relates to a method for preparing a *Curcumae longae* rhizoma extract, a product thereof and the use thereof in the prevention and control of plant powdery mildew. The preparation method comprises: drying and pulverizing *Curcumae longae* rhizoma raw materials, then extracting same with an ethanol aqueous solution to obtain an extract liquid; concentrating the extract liquid, and extracting same with an organic solvent to obtain an aqueous-phase product and an oil-phase product; and performing molecular distillation on the oil-phase product to remove *Curcumae longae* rhizoma oleoresin and obtain the product. The *Curcumae longae* rhizoma extract prepared in the present application has excellent effects in preventing and controlling plant powdery mildew, has the advantages of being safe, low toxicity, rapid biodegradability, not easily developing drug resistance and being conducive to sustainable development, stable physical and chemical properties, a long storage period and low toxicity to terrestrial organisms, and has good economic and ecological benefits.

**Description**

TECHNICAL FIELD

The present application belongs to the technical field of preparation process of plant extracts, and relates to a method for preparing a *Curcuma Longa* rhizome extract, and a product thereof, and use thereof in the prevention and control of plant powdery mildew.

BACKGROUND

Powdery mildew, a fungal disease, can occur throughout the entire growth period of plants, primarily harming leaves, stems, and fruits. In the early stages of infection, white lesions appear and the color gradually turns to light brown, and black perithecium may be formed through self-fertilization or hybridization. Initially, the mildews are scattered separately but later merge into a large mildew lesion, and sometimes, the large mildew covers the entire leaf, which severely impairs photosynthesis, disrupts normal metabolism, accelerates premature aging, and reduces crop yield and quality.

In *Leguminosae* plants, powdery mildew mainly affects the leaves. Early symptoms include the formation of nearly circular powdery white mildew on the leaves, or the formation of purple-brown spots on the underside of leaves, covering with a thin layer of white powder-the superficial vegetative hyphae of the pathogen. These spots later merge into powdery spots as the reproductive hyphae produce abundant conidia. In severe cases, the spots coalesce, covering the entire leaf and causing the leaf to wither or fall off.

Roses, valued for their ornamental, medicinal, and edible uses, have effects such as refreshing the spleen, relieving depression, dredging meridians, promoting blood circulation, and enhancing beauty. With rising living standards, market demand for roses is increasing, leading to supply shortages in recent years. Powdery mildew is a common disease affecting roses and other *Rosaceae* plants. Infected leaves and young shoots develop a white powdery coating, which can turn leaves yellow and cause them to drop when severe, stunting growth and flowering of the plant, and resulting in significant economic losses for growers. Conventional prevention and control method comprises spraying with a 1000-fold dilution of 70% thiophanate-methyl or a 2000-fold dilution of 50% amobam. However, the long-term use of these synthetic chemical fungicides leads to pathogen resistance, reducing efficacy and requiring increased pesticide application, which further harms the environment and food safety.

Grapes, rich in nutritional and medicinal value, have seen expanding cultivation areas in China. However, grapevines are susceptible to various diseases, with powdery mildew being a major threat. The grape powdery mildew affects green parts such as fruits, leaves, and young shoots, with fruit damage causing the greatest losses. Infected fruits develop a gray-white powdery mold, while leaves become covered in a similar coating and gradually spread to the entire leaf, eventually causing the leaf to curl and wither. Young shoots initially show small gray-white spots that spread and darken to dark gray and finally black, severely impacting grape yield and quality. Current control methods comprise spraying a lime-sulpher-synthetic-solution with 3-5 Baume degrees and a lime-sulpher-synthetic-solution with 0.2-0.5 Baume degrees, or a 500-fold dilution of 50% thiophanate, or a 1000-fold dilution of 70% thiophanate-methyl, or a 1000-fold dilution of 25% triadimefon wettable powder, for one time before and after budbreak, respectively. However, the spraying of conventional chemical synthetic agents causes a series of problems, such as pathogen resistance and pesticide residues. Therefore, it is necessary to effectively improve the conventional prevention and control of grape powdery mildew.

In agricultural production, the use of synthetic chemical pesticides has long accounted for the vast majority of the total amount of pesticides used, but with the continuous promotion and use of synthetic chemical pesticides, their disadvantages have gradually emerged. Synthetic chemical pesticides are difficult to degrade and have high toxicity. Long-term use of synthetic chemical pesticides can easily lead to resistance, thereby reducing or even losing the prevention and control effect. Moreover, synthetic chemical pesticides entering the environment can easily cause environmental pollution. Some chemical pesticides that are difficult to degrade may even be continuously enriched through the food chain and eventually enter the human body, causing harm to human health. Nowadays, under the pursuit of green and environmental protection, the use of synthetic chemical pesticides has gradually decreased, while in contrast, the gradual development of biopesticides. Biopesticides refer to a type of pesticide preparation that uses biological living organisms or their metabolites that can prevent and control pests, bacteria, weeds, nematodes, rats and other pests, or substances with specific effects synthesized through bionics as active ingredients. The active ingredients mainly come from animals, plants, and microorganisms. Plant-derived pesticides are a major component of biological pesticides.

Plant-derived pesticides are novel pesticides developed using plants themselves or effective active ingredients extracted from plants that have a prevention and control effect on plant pests and weeds. Among the various plant resources in the world, many plant resources contain effective active substances for preventing and controlling diseases and eliminating pests, including *Tanacetum cinerariifolium, Melia azedarach,* etc. Plant-derived pesticides have abundant plant resources that can be developed and broad prospects for industrialization.

*Curcuma longa L.,* a perennial herb of the family *Zingiberaceae* and genus *Curcuma,* and is also a common Chinese herbal material. This plant contains chemical components such as curcumin, turmeric oleoresins, and volatile oils. The plant itself and the active substances contained are used in many industries such as medicine, industry, agriculture, and food. In medicine: it has the effect of dispersing blood stasis and promoting the circulation of the body, and promoting menstruation and relieving pain; experimental studies have shown that the active substances contained in *Curcuma longa L.* have an effect in anti-tumor, anti-inflammatory, antibacterial, antioxidant, regulating cardiovascular function, and regulating blood system functions. In industry: the extract of *Curcuma longa L.* can be used as a natural dye and a cosmetic raw material. In the food industry: it can be used as a condiment and food coloring, etc. In agriculture: it's extract has a good repelling effect on *Tribolium castaneum, Sitophilus zeamais, Callosobruchus chinensis,* etc., and has an inhibitory effect on the growth of *Schistocerca gregaria* and nymphs of *Pyrrhocoridae.* Studies have also shown that 3% of neem oil and turmeric powder extracts together can effectively control *Sitobion avenae* and *Rhopalosiphum padi* in wheat.

In summary, *Curcuma longa L.* is a plant with high use value, which has a wide range of applications. Therefore, it is very meaningful to develop more application areas for *Curcuma longa L..*

SUMMARY

The present application provides a method for preparing a *Curcuma Longa* rhizome extract, and a product thereof and use thereof in the prevention and control of plant powdery mildew.

In a first aspect, the present application provides a method for preparing a *Curcuma Longa* rhizome extract, and the method comprises:

(1) drying and crushing a raw material of *Curcuma Longa* rhizome, and performing extraction with an aqueous ethanol solution to obtain an extract solution;

(2) concentrating the extract solution, and then performing extraction with an organic solvent to obtain an aqueous-phase product and an oil-phase product; and

(3) subjecting the oil-phase product to molecular distillation to remove turmeric oleoresin to obtain the *Curcuma Longa* rhizome extract.

The present application employs a specific preparation process to produce the *Curcuma Longa* rhizome extract. The method involves sequentially subjecting a raw material of *Curcuma Longa* rhizome to drying and crushing, ethanol extraction, further extraction, and molecular distillation. This preparation method demonstrates strong operational feasibility and is suitable for scaled-up industrial production.

The *Curcuma Longa* rhizome extract prepared through the present application appears as a pale yellow, flowable, homogeneous and transparent liquid with a mild ginger-like aroma. Experimental results indicate that the *Curcuma Longa* rhizome extract has exceptional efficacy in both preventing and treating plant powdery mildew, particularly effective against *Leguminosae, Rosaceae,* and *Vitaceae* plant species. Compared to synthetic chemical pesticides, the *Curcuma Longa* rhizome extract prepared through the present application offers significant advantages: natural origin with low toxicity, no environmental accumulation to cause environmental pollution, and degrades rapidly. Furthermore, compared to single-component synthetic chemical pesticides, the *Curcuma Longa* rhizome extract prepared in the present application has a complex composition. The control of plant powdery mildew is achieved through the synergistic interaction of multiple active constituents working together, while some other non-active components also play auxiliary roles. Thus, the target is less likely to develop resistance.

The *Curcuma Longa* rhizome extract prepared through the present application exhibits excellent stability with prolonged storage duration. Furthermore, it demonstrates remarkable environmental friendliness, showing low toxicity to species in terrestrial environments such as birds, honeybees, and silkworms in application environments. These characteristics indicate broad application prospects.

Preferably, a concentration of the aqueous ethanol solution is 55-95%, for example, 55%, 60%, 65%, 68%, 70%, 72%, 75%, 78%, 80%, 82%, 85%, 90%, or 95%. Other specific values between the numerical range are also selectable, which are not recited here. Further preferably, the concentration is 65-85%.

The concentration of the aqueous ethanol solution is specifically selected to be 55-95%, because the *Curcuma Longa* rhizome extract prepared under this concentration range demonstrates significantly enhanced efficacy in preventing and treating plant powdery mildew, particularly for *Leguminosae, Rosaceae,* and *Vitaceae* plants. A further preferred concentration range is 65-85%.

Preferably, a solid-to-liquid ratio of the raw material of *Curcuma Longa* rhizome to the aqueous ethanol solution is (20-150) g/L, for example, 20 g/L, 25 g/L, 30 g/L, 35 g/L, 40 g/L, 45 g/L, 50 g/L, 55 g/L, 60 g/L, 65 g/L, 70 g/L, 80 g/L, 100 g/L, or 150 g/L. Other specific values between the numerical range are also selectable, which are not recited here. Further preferably, the solid-to-liquid ratio is (30-70) g/L.

The solid-to-liquid ratio of the raw material of *Curcuma Longa* rhizome to the aqueous ethanol solution is specifically selected to be (20-150) g/L, because the *Curcuma Longa* rhizome extract prepared under this ratio demonstrates significantly enhanced efficacy in preventing and treating plant powdery mildew, particularly for *Leguminosae, Rosaceae,* and *Vitaceae* plants. A further preferred ratio range is (30-70) g/L.

Preferably, the extraction is performed at a temperature of 10-60°C, for example, 10°C, 15°C, 20°C, 25°C, 30°C, 35°C, 40°C, 45°C, 50°C or 60°C. Other specific values between the numerical range are also selectable, which are not recited here. Further preferably, the temperature is 15-30°C.

Preferably, the extraction is performed for a period of 24-96 h, for example, 24 h, 28 h, 30 h, 35 h, 40 h, 45 h, 48 h, 60 h, 72 h, or 96 h. Other specific values between the numerical range are also selectable, which are not recited here. Further preferably, the period is 30-50 h.

The preferred extraction temperature and time are set at 10-60°C and 24-96 h because further increase in temperature or extension of time, as well as further decrease in temperature or reduction of time, would adversely affect the efficacy of *Curcuma Longa* rhizome extract in controlling plant powdery mildew. The optimal ranges are 15-30°C and 30-50 h.

Preferably, the organic solvent comprises any one or a combination of at least two of n-hexane, petroleum ether, cyclohexane, isooctane, trifluoroacetic acid, trimethylpentane, cyclopentane, heptane, butyryl chloride, trichloroethylene, carbon tetrachloride, propyl ether, or toluene.

The extraction process involved in the present application employs a low-polarity organic solvent, with the aforementioned types being particularly preferred, as they significantly enhance the prevention and control performance for plant powdery mildew of the resulting *Curcuma Longa* rhizome extract.

Preferably, the molecular distillation is performed under a pressure condition of 0.1-10 Pa, for example, 0.1 Pa, 0.5 Pa, 1 Pa, 1.5 Pa, 2 Pa, 2.5 Pa, 3 Pa, 3.5 Pa, 4 Pa, or 5 Pa. Other specific values between the numerical range are also selectable, which are not recited here. Further preferably, the pressure is 0.1-5 Pa.

Preferably, the molecular distillation is performed at a temperature of 100-150°C, for example, 100°C, 110°C, 115°C, 120°C, 125°C, 130°C, 135°C, 140°C, 145°C, or 150°C. Other specific values between the numerical range are also selectable, which are not recited here. Further preferably, the temperature is 110-130°C.

The preferred temperature and pressure of the molecular distillation are set at 100-150°C and 0.1-10 Pa because further increase in temperature or pressure, as well as further decrease in temperature or pressure, would adversely affect the efficacy of *Curcuma Longa* rhizome extract in controlling plant powdery mildew. The optimal ranges for temperature and pressure are 110-130°C and 0.1-5 Pa.

In a second aspect, the present application provides a *Curcuma Longa* rhizome extract prepared by the method for a *Curcuma Longa* rhizome extract as described in the first aspect.

The *Curcuma Longa* rhizome extract presents as a pale yellow, flowable, homogeneous and transparent liquid with a mild ginger-like aroma. It has exceptional efficacy in both preventing and treating plant powdery mildew disease, particularly effective against *Leguminosae, Rosaceae,* and *Vitaceae* plant species, can degrade rapidly in the environment without causing environmental pollution while not easy to develop resistance and facilitate sustainable development, and exhibits stable physical and chemical properties with prolonged storage duration; furthermore, it demonstrates remarkable environmental friendliness, showing low toxicity to species such as birds, honeybees, and silkworms in application environments. These characteristics indicate broad application prospects.

In a third aspect, the present application provides use of the *Curcuma Longa* rhizome extract as described in the second aspect in preventing and controlling plant powdery mildew, wherein the plant comprises *Leguminosae, Rosaceae,* and *Vitaceae* plants.

It is well known to those skilled in the art that *Leguminosae, Rosaceae,* and *Vitaceae* plants are susceptible to powdery mildew, causing huge economic losses. The present application creatively developed a plant-derived active composition for preventing and controlling plant powdery mildew of the above-mentioned plants. The experimental data show that the active composition has good efficacy, which provides a new strategy for better prevention and control of plant powdery mildew.

In a fourth aspect, the present application provides a prevention and control method for plant powdery mildew, and the prevention and control method comprises: applying an effective dosage of the *Curcuma Longa* rhizome extract as described in the second aspect to *Leguminosae, Rosaceae,* or *Vitaceae* plants.

In a fifth aspect, the present application provides a preparation having the efficacy of preventing or treating powdery mildew in *Leguminosae* plants, and an effective ingredient in the preparation comprises the *Curcuma Longa* rhizome extract as described in the second aspect.

In a sixth aspect, the present application provides a preparation having the efficacy of preventing or treating powdery mildew in *Rosaceae* plants, and an effective ingredient in the preparation comprises the *Curcuma Longa* rhizome extract as described in the second aspect.

In a seventh aspect, the present application provides a preparation having the efficacy of preventing or treating powdery mildew in *Vitaceae* plants, and an effective ingredient in the preparation comprises the *Curcuma Longa* rhizome extract as described in the second aspect.

Preferably, a dosage-form of the above preparation comprises, but is not limited to suspension concentrate (SC), emulsifiable concentrate (EC), microemulsion (ME), emulsion oil in water (EW), solutable concentrate (SL), wettable powder (WP), water-dispersible granule (WDG, also known as dry flowable), aqueous solution (AS), granule (GR), microcapsule suspension (CS), and oil-based flowable concentrate (OF).

Preferably, a component of the above preparation further comprises an auxiliary agent, and the auxiliary agent comprises, but is not limited to an emulsifier, a solubilizer, a surfactant, and an organic solvent. These auxiliary agents play a role in emulsifying oily substances, increasing the solubility of the preparation in water, and enhancing the adhesion with plant surfaces, thereby achieving the effect of improving the utilization rate of the effective substance and reducing the loss of the preparation. The *Curcuma Longa* rhizome extract involved in the present application is insoluble to water; thereby some auxiliary agents are necessarily added to increase the water solubility. The addition of the auxiliary agent can further reduce the degradation of the effective substance due to factors such as light and temperature.

Compared with the prior art, the present application has the following beneficial effects.

(1) In the present application, a specific preparation process is adopted to prepare the *Curcuma Longa* rhizome extract, that is, the method involves sequentially subjecting the raw material of *Curcuma Longa* rhizome to drying and crushing, ethanol extraction, further extraction, and molecular distillation. This preparation method demonstrates strong operational feasibility and is suitable for scaled-up industrial production.

(2) The prepared *Curcuma Longa* rhizome extract presents as a pale yellow, flowable, homogeneous and transparent liquid with a mild ginger-like aroma. The *Curcuma Longa* rhizome extract has exceptional efficacy in both preventing and treating plant powdery mildew, particularly effective against *Leguminosae, Rosaceae,* and *Vitaceae* plants, and it can degrade rapidly in the environment without causing environmental pollution while not easy to develop resistance and facilitate sustainable development. The extract exhibits stable physical and chemical properties with prolonged storage duration; furthermore, it demonstrates remarkable environmental friendliness, showing low toxicity to species such as birds, honeybees, and silkworms in application environments. These characteristics indicate broad application prospects in preventing and controlling plant powdery mildew and provide a new strategy for better prevention and control of plant powdery mildew.

DETAILED DESCRIPTION

The technical solutions of the present application will be further explained below by specific embodiments. It should be understood by those skilled in the art that the examples are merely used to understand the application and should not be considered as specific limitations of the present application.

The raw material of dried *Curcuma Longa* rhizome involved in the following contents was purchased from Shanghai Traditional Chinese Medicine Market.

**Example 1**

This example provides a *Curcuma Longa* rhizome extract prepared through the following method:

(1) a raw material of dried *Curcuma Longa* rhizome was crushed and then subjected to extraction by 75% aqueous ethanol solution (in a solid-to-liquid ratio of 50 g/L) at 20°C for 48 h, to obtain an extract solution;

(2) the extract solution was concentrated and subjected to extraction by n-hexane, to obtain an aqueous-phase product and an oil-phase product; and

(3) the oil-phase product was subjected to molecular distillation under a pressure of 3 Pa and a temperature of 120°C to remove turmeric oleoresin, to obtain the *Curcuma Longa* rhizome extract.

**Example 2**

This example provides a *Curcuma Longa* rhizome extract prepared through the following method:

(1) a raw material of dried *Curcuma Longa* rhizome was crushed and then subjected to extraction by 85% aqueous ethanol solution (in a solid-to-liquid ratio of 30 g/L) at 15°C for 50 h, to obtain an extract solution;

(2) the extract solution was concentrated and subjected to extraction by petroleum ether, to obtain an aqueous-phase product and an oil-phase product; and

(3) the oil-phase product was subjected to molecular distillation under a pressure of 1 Pa and a temperature of 130°C to remove turmeric oleoresin, to obtain the *Curcuma Longa* rhizome extract.

## Example 3

This example provides a *Curcuma Longa* rhizome extract prepared through the following method:

(1) a raw material of dried *Curcuma Longa* rhizome was crushed and then subjected to extraction by 65% aqueous ethanol solution (in a solid-to-liquid ratio of 70 g/L) at 30°C for 30 h, to obtain an extract solution;

(2) the extract solution was concentrated and subjected to extraction by cyclohexane, to obtain an aqueous-phase product and an oil-phase product; and

(3) the oil-phase product was subjected to molecular distillation under a pressure of 5 Pa and a temperature of 110°C to remove turmeric oleoresin, to obtain the *Curcuma Longa* rhizome extract.

## Example 4

This example provides a *Curcuma Longa* rhizome extract, wherein the preparation method differs from Preparation Example 1 only in that the 75% aqueous ethanol solution was replaced with an equal amount of 55% aqueous ethanol solution. Other conditions were all the same.

## Example 5

This example provides a *Curcuma Longa* rhizome extract, wherein the preparation method differs from Preparation Example 1 only in that the 75% aqueous ethanol solution was replaced with an equal amount of 95% aqueous ethanol solution. Other conditions were all the same.

## Example 6

This example provides a *Curcuma Longa* rhizome extract, wherein the preparation method differs from Preparation Example 1 only in that the mass of the raw material of *Curcuma Longa* rhizome remained unchanged, while the solid-to-liquid ratio of 50 g/L was replaced with 20 g/L. Other conditions were all the same.

## Example 7

This example provides a *Curcuma Longa* rhizome extract, wherein the preparation method differs from Preparation Example 1 only in that the mass of the raw material of *Curcuma Longa* rhizome remained unchanged, while the solid-to-liquid ratio of 50 g/L was replaced with 150 g/L. Other conditions were all the same.

## Example 8

This example provides a *Curcuma Longa* rhizome extract, wherein the preparation method differs from Preparation Example 1 only in that the temperature of the molecular distillation was replaced from 120°C to 100°C. Other conditions were all the same.

## Example 9

This example provides a *Curcuma Longa* rhizome extract, wherein the preparation method differs from Preparation Example 1 only in that the temperature of the molecular distillation was replaced from 120°C to 150°C. Other conditions were all the same.

**Example 10**

This example provides a *Curcuma Longa* rhizome extract, wherein the preparation method differs from Preparation Example 1 only in that the extracting agent was replaced from n-hexane to a mixed solvent of n-hexane and isooctane in a volume ratio of 2:1 with an equal volume.

**Example 11**

This example provides a *Curcuma Longa* rhizome extract, wherein the preparation method differs from Preparation Example 1 only in that the extracting agent was replaced from n-hexane to isooctane with an equal volume.

**Application Example 1**

This application example provides an emulsifiable concentrate formulation with *Curcuma Longa* rhizome extract as the active ingredient. The formulation of the emulsifiable concentrate is as follows: 50% of the *Curcuma Longa* rhizome extract prepared by Example 1, 30% of methyl oleate, 10% of Polysorbate 80 (Tween 80), and 10% of calcium dodecylbenzene sulfonate.

**Application Examples 2-11**

This application example provides ten emulsifiable concentrate formulations with *Curcuma Longa* rhizome extract as the active ingredient, wherein the formulation differs from Application Example 1 only in that the *Curcuma Longa* rhizome extract prepared by Example 1 was replaced with an equal amount of the *Curcuma Longa* rhizome extract prepared by Examples 2-11, respectively.

**Test Example 1**

The *Curcuma Longa* rhizome extracts prepared by Examples 1-3 were subjected to characterizations of the following properties.

(1) Determination of the mass percentage of ar-turmerone (%): the sample was dissolved in anhydrous methanol and subjected to high-performance liquid chromatography separation with a mobile phase of methanol and water and a chromatographic column of C18 (4.6 mm × 250 mm, 5 $\mu$m). The external standard method was used for the determination of ar-turmerone content in the sample at a UV absorbance of 242 nm.

(2) Determination of pH: referring to GB/T 1601-1993.

(3) Determination of moisture content (%): referring to 2.1.2 in GB/T 1600-2001.

(4) Determination of acetone insoluble (%): referring to GB/T 19138-2003.

The results are shown in Table 1.

Table 1

| Property | Example 1 | Example 2 | Example 3 |
|---|---|---|---|
| Appearance | Pale yellow oily liquid | Pale yellow oily liquid | Pale yellow oily liquid |
| Mass percentage of ar-turmerone (%) | 13.2 | 12.6 | 11.8 |
| pH value | 4.9 | 5.1 | 4.7 |
| Moisture content (%) | 0.1 | 0.1 | 0.2 |
| Acetone insoluble (%) | 0.02 | 0.01 | 0.03 |

As can be seen from the data in Table 1: in the *Curcuma Longa* rhizome extract prepared by the present application, ar-turmerone, serves as one of the active ingredients, has a high content; a weakly acidic pH, which could ensure active ingredient stability and reduce decomposition to minimize packaging corrosion; a low moisture content of less than 0.5%, which could effectively prevent decomposition of active components in the product; and acetone insoluble of less than 0.5%, indicating a high product purity.

(5) The *Curcuma Longa* rhizome extract prepared by Example 1 was subjected to ar-turmerone hydrolysis testing according to the Chinese standard GB/T 31270.1-2014 *Test guidelines on environmental safety assessment for chemical pesticides-Part 2: Hydrolysis.* The liquid chromatography was adopted to determine ar-turmerone with a chromatographic column of Waters Xbridge ™$C_8$ 4.6 × 250 mm, 5 $\mu$m, a mobile phase of acetonitrile and water (60:40 v/v), an injection volume of 20 $\mu$L, and determined by an UV detector at 242 nm.

Test results: under constant temperature of 25°C and dark conditions, the degradation half-life of ar-turmerone was 9.5 days (pH = 4), 9.56 days (pH = 7), and 8.27 days (pH = 9), respectively; under constant temperature of 50°C and dark conditions, the degradation half-life of ar-turmerone was 0.819 days (pH = 4), 0.837 days (pH = 7), 0.847 days (pH = 9), respectively. According to the classification standard of pesticide degradability in hydrolysis in Chinese standards, the degradability grade of ar-turmerone at pH = 4, pH = 7, and pH = 9 was "Grade I (readily degradable)".

(6) The *Curcuma Longa* rhizome extract prepared by Example 1 was subjected to ar-turmerone soil aerobic degradation test according to the Chinese standard GB/T *31270.1-2014 Test guidelines on environmental safety assessment for chemical pesticides-Part 1: Transformation in soils.* The liquid chromatography was adopted to determine ar-turmerone with a chromatographic column of Waters Xbridge ™$C_8$ 4.6 × 250 mm, 5 $\mu$m, a mobile phase of acetonitrile and water (60:40 v/v), and determined by an UV detector at 242 nm.

Test results: under aerobic conditions, the degradation half-life of ar-turmerone in soils was 2.75 days in red soil, 3.57 days in black soil, 3.09 days in paddy soil, and 3.41 days in aquic brown soil. According to the classification standard of pesticide degradability in soils in Chinese standards, the degradability grade of ar-turmerone in the four soils was "Grade I (readily degradable)".

**Test Example 2**

The *Curcuma Longa* rhizome extracts prepared by Examples 1-3 were subjected to toxicological characterization:

(1) determination of acute oral median lethal dose in male and female SD rats: the test was performed according to the method referring to GB/T 15670.4-2017 *Toxicological test methods for pesticides registration-Part 4;*

(3) determination of acute dermal median lethal dose in male and female SD rats: the test was performed according to the method referring to GB/T 15670.5-2017 *Toxicological test methods for pesticides registration-Part 5;*

(4) determination of acute inhalation median lethal concentration in male and female SD rats: the test was performed according to the method referring to GB/T 15670.6-2017 *Toxicological test methods for pesticides registration-Part 6;*

(5) eye irritation test in New Zealand White rabbits: the test was performed according to the method referring to GB/T 15670.8-2017 *Toxicological test methods for pesticides registration-Part 8;*

(6) skin irritation test in New Zealand White rabbits: the test was performed according to the method referring to GB/T 15670.7-2017 *Toxicological test methods for pesticides registration-Part 7;* and

(7) skin sensitization test in Hartley guinea pigs: the test was performed according to the method referring to GB/T 15670.9-2017 *Toxicological test methods for pesticides registration-Part 9.*

The results are shown in Table 2.

Table 2

| Property | Example 1 | Example 2 | Example 3 |
|---|---|---|---|
| Acute oral in female rats LD50 | >5000 mg/kg | >5000 mg/kg | >5000 mg/kg |
| Acute oral in male rats LD50 | >5000 mg/kg | >5000 mg/kg | >5000 mg/kg |
| Acute dermal in | >2000 mg/kg | >2000 mg/kg | >2000 mg/kg |
| female rats LD50 | | | |
| Acute dermal in male rats LD50 | >2000 mg/kg | >2000 mg/kg | >2000 mg/kg |

(continued)

| Property | Example 1 | Example 2 | Example 3 |
|---|---|---|---|
| Acute inhalation in female rats LD50 | >5000 mg/m$^3$ | >5000 mg/m$^3$ | >5000 mg/m$^3$ |
| Acute inhalation in male rats LD50 | >5000 mg/m$^3$ | >5000 mg/m$^3$ | >5000 mg/m$^3$ |
| Eye irritation in New Zealand White rabbits | Recovered within 36 h | Recovered within 38 h | Recovered within 40 h |
| Skin irritation in New Zealand White rabbits | 0.7 | 0.8 | 0.9 |
| Sensitization rate in Hartley guinea pigs | 0% | 0% | 0% |

As can be seen from the data in Table 2, the *Curcuma Longa* rhizome extracts involved in the present application has high safety, slightly toxic, low irritation, and weak allergenicity.

**Test Example 3**

The *Curcuma Longa* rhizome extracts prepared by Examples 1-3 were subjected to environmental impact assessment.

All the environmental impact tests were conducted by Shenyang Research Institute of Chemical Industry with the following results:

(1) acute oral toxicity in quails: according to the method referring to GB/T 31270.9-2014 *Test guidelines on environmental safety assessment for chemical pesticides-Part 9* (female for 48 h);

(2) acute oral toxicity in honeybees: according to the method referring to GB/T *31270.10-2014 Test guidelines on environmental safety assessment for chemical pesticides-Part 10* (female for 48 h);

(3) acute contact toxicity in honeybees: according to the method referring to GB/T *31270.10-2014 Test guidelines on environmental safety assessment for chemical pesticides-Part 10* (male for 48 h); and

(4) acute toxicity in silkworms: according to the method referring to GB/T *31270.11-2014 Test guidelines on environmental safety assessment for chemical pesticides-Part 11* (for 48 h).

The results are shown in Table 3.

Table 3

| Property | Example 1 | Example 2 | Example 3 |
|---|---|---|---|
| Acute oral toxicity in quails LD$_{50}$ | >2000 mg/kg | >2000 mg/kg | >2000 mg/kg |
| Acute oral toxicity in honeybees LD$_{50}$ | >99.6 $\mu$g/each honeybee | >99.0 $\mu$g/each honeybee | >99.1 $\mu$g/each honeybee |
| Acute contact toxicity in honeybees LD$_{50}$ | >100 $\mu$g/each honeybee | >99.5 $\mu$g/each honeybee | >99.0 $\mu$g/each honeybee |
| Acute toxicity in silkworms LC$_{50}$ | >534 mg/L | >483 mg/L | >508 mg/L |

As can be seen from the data in Table 3, the *Curcuma Longa* rhizome extracts involved in the present application are environmentally friendly and have low toxicity to birds, honeybees, silkworms, and other organisms in the environment.

**Test Example 4**

The emulsifiable concentrate formulations prepared by Application Examples 1-11 were subjected to tests for the prevention and control of pea powdery mildew.

(1) Cultivation of pea seedlings: pea seeds (variety: "Sweet Crisp") were soaked in a Petri dish with water for 24 h at room temperature, then the water was drained, and moistened absorbent cotton was placed in the dish, and pea seeds were distributed evenly in the dish. The cotton was kept moist by daily watering. After approximately one week, when the pea seedlings reached a height of 2-3 cm, they were transplanted into small pots and watered every two days. Pea seedlings were selected for experiment when the first true leaf was fully expanded and the second true leaf had begun to unfold, ensuring they were healthy and of uniform size.

(2) Preparation of *Erysiphe pisi DC.* spore suspension: the spray method was used to inoculate the conidia suspension of the pathogen to pea seedlings, thereby it is necessary to prepare a spore suspension with an appropriate concentration, and the method is as follows:

(2.1) purified water was filled into a spray bottle, freshly developed powdery mildew spots on infected leaves were selected, and the spores were washed off into a clean beaker by gentle spraying; and

(2.2) the collected spore suspension was uniformly mixed, and one droplet was taken on a microscope slide and examined by a microscope to assess spore turgidity and morphology and observe the number of spores in the field of view at a magnification of 15 × 10 to check if it met the requirements. Requirements on the spore suspension: spores were plump in morphology to ensure the viability; 20-30 spores per field of view at the magnification of 15 × 10, which was the optimal range; and the spore suspension needed to be used within 2 h from preparation to ensure the viability of spores.

(3) Inoculation of *Erysiphe pisi DC.*:

(3.1) the prepared spore suspension was uniformly sprayed onto pea leaves;

(3.2) the inoculated pea seedlings were transferred to a growth chamber, and the remaining spore suspension was sprayed inside the chamber to create a high humidity environment, then the chamber was covered and incubated at about 25°C for 24 h; and

(3.3) after 24 h, the chamber was uncovered and the pea seedlings were taken out, and after the leaves were air-dried, the pea seedlings could be subjected to chemical treatment.

(4) Administration method:

(4.1) for each group, 0.1 mL emulsifiable concentrate formulation was diluted 200-fold with deionized water, filled into a spray bottle, and labeled for later use;

(4.2) preparation of agent for adjuvant-control group: according to the preparation formula, the content of the *Curcuma Longa* rhizome extract was replaced with water, and then an adjuvant solution was prepared with the same concentration of the adjuvant contained in the formulation; 0.1 mL the adjuvant solution was diluted 200-fold with water, filled into a spray bottle, and labeled for later use;

(4.3) preparation of agent for positive control group: fungicide tebuconazole suspension concentrate of 430 g/L was diluted 2000-fold with water, filled into a spray bottle, and labeled for later use;

(4.4) preparation of blank control group: deionized water was filled into a spray bottle, and labeled for later use;

(4.5) spraying: the inoculated pea seedlings were cultivated for 24 h, and treated with agents (4 replicates per treatment); leaves were sprayed with the corresponding agent evenly, and the standard was to cover the complete surface of the leaves;

(4.6) cultivation: the agent-treated pea seedlings were cultivated at about 25°C and humidity around 70%, and watered every 2 days; and

(4.7) observation: the phytotoxicity symptom was observed 24 h and 5 days after the spraying, and agent causing severe phytotoxicity symptom was discarded according to the phytotoxicity symptom; the disease incidence of the remained agents was counted six days later to calculate the prevention and control effect, and the prevention and control changes were observed and recorded for several consecutive days.

(5) Efficacy evaluation:

10 plants were evaluated per group of samples, and all leaves were assessed per plant. The disease rating scale was as follows:

Grade 0: no lesions;

Grade 1: ≤5% leaf coverage with lesions;

Grade 3: 6-15% leaf coverage;

Grade 5: 16-25% leaf coverage;

Grade 7: 26-50% leaf coverage; and

Grade 9: ≥51% leaf coverage.

Disease index= [Σ(number of diseased leaves at each grade × corresponding grade value)] / (total number of leaves assessed × highest disease index 9) × 100 Control efficacy% = (disease index of control group after administration - disease index of other group after administration) / disease index of control group after administration × 100

The data of control efficacy is shown in Table 4.

Table 4

| \Group | Control efficacy (%) |
|---|---|
| Application Example 1 | 79.82 |
| Application Example 2 | 78.44 |
| Application Example 3 | 77.58 |
| Application Example 4 | 72.61 |
| Application Example 5 | 75.36 |
| Application Example 6 | 73.37 |
| Application Example 7 | 74.67 |
| Application Example 8 | 77.57 |
| Application Example 9 | 73.44 |
| Application Example 10 | 81.55 |
| Application Example 11 | 72.63 |
| Adjuvant-control group | 0 |
| Positive control group | 83.81 |
| Blank control group | 0 |

As can be seen from the data in Table 4, the *Curcuma Longa* rhizome extracts involved in the present application have excellent efficacy on pea powdery mildew prevention and control, wherein the preparation conditions of the *Curcuma Longa* rhizome extract also affect this efficacy.

**Test Example 5**

The emulsifiable concentrate formulations prepared by Application Examples 1-3 were subjected to field efficacy trials against grape powdery mildew.

(1) Test target and crop variety

Grape variety: Red Globe; and

target pathogen: grape powdery mildew

(2) Test agents: the emulsifiable concentrate formulations from Application Examples 1-3 diluted 500-fold with water for later use;
agent for positive control: 325 g/L azoxystrobin SC from Zhejiang Tianfeng Bioscience Co., Ltd. with a registration No.: PD20172823 and a batch No.: 20210318, diluted 1000-fold for later use; simultaneously, a water-only control group was set.

(3) Trial location: Zengjiaying Village, Binchuan County, Dali, Yunnan, China
block arrangement: the experiment set up 5 treatments, each treatment had 4 block repeats, and each block repeated an area of 15 m$^2$.

(4) Administration method: a 20-type knapsack electric sprayer from Zhengzhou Xinxiu Agricultural Machinery Co., Ltd. was used for spraying the formulations prepared according to the experimental design and sprayed uniformly onto plants across all treatments until runoff;
Administration were conducted when the initial disease onset stage (i.e., when sporadic lesions appeared on lower leaves) twice at 8-day intervals, and the administration dates were recorded.

(5) Assessment method
Five points were assessed per treatment group, 2 plants were included in each point, and all leaves were assessed per plant.
The disease rating scale was as follows:

Grade 0: no lesions;

Grade 1: ≤5% leaf coverage with lesions;

Grade 3: 6-10% leaf coverage;

Grade 5: 11-20% leaf coverage;

Grade 7: 21-40% leaf coverage; and

Grade 9: ≥40% leaf coverage.

(6) Calculation method for efficacy Disease index = [∑(number of diseased leaves at each grade × corresponding grade value)] / (total number of leaves assessed × 9) × 100 Control efficacy % = [1 - (disease index of treatment block / disease index of control group)] × 100

The results were shown in Table 5.

Table 5

| Assessment date | Control group | Positive control group | Application Example 1 | Application Example 2 | Application Example 3 |
|---|---|---|---|---|---|
| Disease index after 8 days of the first administration | 0.075 | 0.038 | 0.025 | 0.029 | 0.030 |
| Efficacy after 8 days of the first administration | / | 61.47% | 72.16% | 65.43% | 64.42% |
| Disease index after 8 days of the second administration | 0.101 | 0.047 | 0.027 | 0.031 | 0.029 |
| Efficacy after 8 days of the second administration | / | 64.15% | 78.22% | 72.63% | 70.82% |

As can be seen from the data in Table 5, the *Curcuma Longa* rhizome extracts involved in the present application have excellent efficacy on grape powdery mildew prevention and control, wherein the preparation conditions of the *Curcuma Longa* rhizome extract also affect this efficacy.

**Test Example 6**

The emulsifiable concentrate formulations prepared by Application Examples 1-3 were subjected to field efficacy trials against rose powdery mildew.

(1) Test target and crop variety

Rose variety: Awakening; and

target pathogen: rose powdery mildew

(2) Test agents: the emulsifiable concentrate formulations from Application Examples 1-3 diluted 500-fold with water for later use;
agent for positive control: 25% bupirimate ME (from Xi'an MTI Co., Ltd. with a registration No.: PD20190149 and a batch No.: 20201023018), diluted 1000-fold for later use; simultaneously, a water-only control group was set.

(3) Trial location: Goujie Town, Yiliang County, Kunming, Yunnan, China
block arrangement: the experiment set up 5 treatments, each treatment had 4 block repeats, and each block repeated an area of 15 m$^2$.

(4) Administration method: a 20-type knapsack electric sprayer from Zhengzhou Xinxiu Agricultural Machinery Co., Ltd. was used for spraying the formulations prepared according to the experimental design and sprayed uniformly onto plants across all treatments until runoff;
Administration were conducted when the initial disease onset stage (i.e., when sporadic lesions appeared on lower leaves) once, and the administration dates were recorded.

(5)Assessment method
Five points were assessed per treatment group, 2 plants were included in each point, and all leaves were assessed per plant.
The disease rating scale was as follows:

Grade 0: no lesions;

Grade 1: ≤5% leaf coverage with lesions;

Grade 3: 6-10% leaf coverage;

Grade 5: 11-20% leaf coverage;

Grade 7: 21-40% leaf coverage; and

Grade 9: ≥40% leaf coverage.

(6) Calculation method for efficacy Disease index = [∑(number of diseased leaves at each grade × corresponding grade value)] / (total number of leaves assessed × 9) × 100 Control efficacy% = [1 - (disease index of treatment block / disease index of control group)] × 100

The results were shown in Table 6.

Table 6

| Group | Disease index after 7 days of the first administration | Control efficacy after 7 days of the first administration |
|---|---|---|
| Control group | 0.054 | / |
| Positive control group | 0.014 | 67.36% |
| Application Example 1 | 0.009 | 72.59% |
| Application Example 2 | 0.015 | 63.42% |
| Application Example 3 | 0.017 | 61.74% |

As can be seen from the data in Table 6, the *Curcuma Longa* rhizome extract related in the present application has excellent efficacy on rose powdery mildew prevention and control, wherein the preparation conditions of the *Curcuma Longa* rhizome extract also affect this efficacy.

The applicant declares that the present application illustrates a turmeric (*Curcuma Longa*) rhizome extract, and a product thereof, and use thereof in the prevention and control of plant powdery mildew of the present application by the above examples, but the present application is not limited to the above examples, that is, the present application does not necessarily rely on the above examples to be implemented. Those skilled in the art should understand that any improvements of the present application, the equivalent substitution of each raw material, the addition of auxiliary ingredients, and the selection of specific methods shall fall within the protection scope and disclosure scope of the present application.

**Claims**

1. A method for preparing a *Curcuma Longa* rhizome extract, comprising:

    (1) drying and crushing a raw material of *Curcuma Longa* rhizome, and performing extraction with an aqueous ethanol solution to obtain an extract solution;
    (2) concentrating the extract solution, and then performing extraction with an organic solvent to obtain an aqueous-phase product and an oil-phase product; and
    (3) subjecting the oil-phase product to molecular distillation to remove turmeric oleoresin to obtain the *Curcuma Longa* rhizome extract.

2. The method for preparing a *Curcuma Longa* rhizome extract according to claim 1, wherein a concentration of the aqueous ethanol solution is 55-95%, and preferably 65-85%.

3. The method for preparing a *Curcuma Longa* rhizome extract according to claim 1 or 2, wherein a solid-to-liquid ratio of the raw material of *Curcuma Longa* rhizome to the aqueous ethanol solution is (20-150) g/L, and preferably (30-70) g/L.

4. The method for preparing a *Curcuma Longa* rhizome extract according to any one of claims 1-3, wherein the extraction is performed at a temperature of 10-60°C, and preferably 15-30°C;

preferably, the extraction is performed for a period of 24-96 h, and further preferably 30-50 h.

5. The method for preparing a *Curcuma Longa* rhizome extract according to any one of claims 1-4, wherein the organic solvent comprises any one or a combination of at least two of n-hexane, petroleum ether, cyclohexane, isooctane, trifluoroacetic acid, trimethylpentane, cyclopentane, heptane, butyryl chloride, trichloroethylene, carbon tetrachloride, propyl ether, or toluene.

6. The method for preparing a *Curcuma Longa* rhizome extract according to any one of claims 1-5, wherein the molecular distillation is performed under a pressure condition of 0.1-10 Pa, and preferably 0.1-5 Pa;
   preferably, the molecular distillation is performed at a temperature of 100-150°C, and preferably 110-130°C.

7. A *Curcuma Longa* rhizome extract, which is prepared by the method for preparing a *Curcuma Longa* rhizome extract according to any one of claims 1-6.

8. Use of the *Curcuma Longa* rhizome extract according to claim 7 in the prevention and control of plant powdery mildew, wherein the plant comprises *Leguminosae, Rosaceae,* and *Vitaceae* plants.

9. A method of preventing and controlling plant powdery mildew, comprising applying an effective amount of the *Curcuma Longa* rhizome extract according to claim 7 to *Leguminosae, Rosaceae,* or *Vitaceae* plants.

10. A preparation having the efficacy of preventing or treating powdery mildew in *Leguminosae* plants, which comprises the *Curcuma Longa* rhizome extract according to claim 7.

11. A preparation having the efficacy of preventing or treating powdery mildew in *Rosaceae* plants, which comprises the *Curcuma Longa* rhizome extract according to claim 7.

12. A preparation having the efficacy of preventing or treating powdery mildew in *Vitaceae* plants, which comprises the *Curcuma Longa* rhizome extract according to claim 7.

## INTERNATIONAL SEARCH REPORT

| International application No. |
| --- |
| **PCT/CN2023/096997** |

### A. CLASSIFICATION OF SUBJECT MATTER

A01N65/48(2009.01)i; A01P3/00(2006.01)i

According to International Patent Classification (IPC) or to both national classification and IPC

### B. FIELDS SEARCHED

Minimum documentation searched (classification system followed by classification symbols)

IPC:A01N,A01P

Documentation searched other than minimum documentation to the extent that such documents are included in the fields searched

Electronic data base consulted during the international search (name of data base and, where practicable, search terms used)

CNTXT, CNKI, DWPI: 白粉病, 短程蒸馏, 芳姜黄酮, 分子蒸馏, 姜黄, 乙醇, 姜黄油树脂, powdery mildew, turmeric, rhizome, curcuma longa, ar-turmerone, molecular distil+, 豌豆白粉病, 玫瑰白粉病, 葡萄白粉病, uncinula necator, sphaerotheca rosae, pannsa, erysphe pist

### C. DOCUMENTS CONSIDERED TO BE RELEVANT

| Category* | Citation of document, with indication, where appropriate, of the relevant passages | Relevant to claim No. |
| --- | --- | --- |
| X | CN 102408320 A (HENAN ZHONGDA BIOLOGICAL ENGINEERING CO., LTD.) 11 April 2012 (2012-04-11)<br>claims 1, 2, 4, 7 and 9, and description, paragraphs 0030-0031 | 1-7, 10-12 |
| Y | CN 114009434 A (SHANGHAI JIAO TONG UNIVERSITY) 08 February 2022 (2022-02-08)<br>claims 3 and 7-9, and description, pages 5-6 | 5-7, 10-12 |
| Y | 崔语涵等 (CUI, Yuhan et al.). "姜黄化学成分的分离与鉴定 (Isolation and Identification of Chemical Constituents from Rhizomes of Curcuma Longa L)"<br>*沈阳药科大学学报 (Journal of Shenyang Pharmaceutical University),*<br>Vol. 33, No. 3, 20 March 2016 (2016-03-20),<br>page 199, left-hand column, and page 200, left-hand column | 1-7, 10-12 |
| Y | 张炎强(ZHANG, Yanqiang). "姜黄活性成分的提取, 分离纯化及鉴定分析 (Non-official translation: Extraction, Separation, Purification and Identification of Active Components from Turmeric)"<br>*中国优秀硕士学位论文全文数据库农业科技辑 (Agriculture, China Master's Theses Full-text Database),* No. 3, 15 March 2012 (2012-03-15),<br>pages 53-54, 58 and 60-61 | 1-7, 10-12 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 December 2023** | **08 December 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/096997** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 101259247 A (MASSON GROUP CO., LTD.) 10 September 2008 (2008-09-10)<br>    claim 1 | 1-7, 10-12 |
| A | CN 108935465 A (SHANGHAI JIAO TONG UNIVERSITY) 07 December 2018<br>(2018-12-07)<br>    entire document | 1-12 |
| A | 赵永田等 (ZHAO, Yongtian et al.). "10种药用植物乙醇提取物的抑真菌活性研究<br>(Antifungal Activity of Ethanol Extracts from Ten Medicinal Plants)"<br>植物医学 (Plant Health and Medicine), Vol. 1, No. 3, 25 June 2022 (2022-06-25),<br>    page 42, 1.3.2 Preparation of Crude Plant Ethanol Extracts | 1-12 |

Form PCT/ISA/210 (second sheet) (July 2022)

**INTERNATIONAL SEARCH REPORT**
Information on patent family members

International application No.

**PCT/CN2023/096997**

| Patent document cited in search report | | | Publication date (day/month/year) | Patent family member(s) | Publication date (day/month/year) |
|---|---|---|---|---|---|
| CN | 102408320 | A | 11 April 2012 | None | |
| CN | 114009434 | A | 08 February 2022 | None | |
| CN | 101259247 | A | 10 September 2008 | None | |
| CN | 108935465 | A | 07 December 2018 | None | |

Form PCT/ISA/210 (patent family annex) (July 2022)